# EUROPÄISCHE PATENTSCHRIFT

(11) **EP 3 412 373 B1**
(45) Veröffentlichungstag und Bekanntmachung des Hinweises auf die Patenterteilung: **16.09.2020**
(21) Anmeldenummer: 18176580.1
(22) Anmeldetag: 07.06.2018
(51) Int. Cl.: B21D 51/26

(54) **BEARBEITUNGSEINRICHTUNG UND -VERFAHREN MIT RELATIV BEWEGTEN WERKZEUGEN**
PROCESSING DEVICE AND METHOD WITH TOOLS MOVING RELATIVE TO EACH OTHER
DISPOSITIF ET PROCÉDÉ D'USINAGE AVEC DÉPLACEMENT RELATIF D'OUTILS

(30) Priorität: 09.06.2017 DE 102017112771
(43) Veröffentlichungstag der Anmeldung: 12.12.2018
(73) Patentinhaber: Mall + Herlan GmbH, 76327 Pfinztal (DE)
(72) Erfinder: Weis, Manfred, 78315 Radolfzell (DE); Peter, Mathias, 76863 Herxheim (DE)
(74) Vertreter: Eisenführ Speiser

(56) Entgegenhaltungen:
- EP-A1- 0 068 821
- JP-A- H06 126 358
- US-A- 3 581 542

## Beschreibung

Die vorliegende Erfindung betrifft das Gebiet von Bearbeitungseinrichtungen und Verfahren zur Bearbeitung mit relativ bewegten Werkzeugen und insbesondere derartige Bearbeitungseinrichtungen und -Verfahren bei denen während einer insbesondere zyklischen Bewegung einer Bewegungseinheit eine Bearbeitung durch eine Bearbeitungseinheit vorgesehen ist, deren Relativgeschwindigkeit gegenüber einem zu bearbeitenden Element geringer als die der Bewegungseinheit ist und vorzugsweise (annähernd) null beträgt.

Solch eine Bearbeitungseinrichtung und solch ein Verfahren sind z.B. in der JP-A-06126358 offenbart, auf welcher der Oberbegriff der Ansprüche 1 und 10 basiert.

Die vorliegende Erfindung besitzt insbesondere Relevanz für die Bearbeitung von Metallbehältern, etwa im Bereich von Aerosolbehältern oder Getränkebehälter und dergleichen.

Bei der Herstellung von Metallbehältern, beispielsweise von Aerosolbehältern, werden die Schultern im Allgemeinen durch einen sequenziellen, linearen und typischerweise achsparallelen Umformprozess, das Einziehen, hergestellt. Dazu sind die entsprechenden Werkzeuge in der Maschine (Einziehmaschine) in einer entsprechenden Aufnahme befestigt, die durch die Maschine normalerweise intermittierend linear und entlang der Längsachse der zu formenden Behälter bewegt wird, wobei die Werkzeuge während eines Teils der Bewegung mit dem Behälter im Eingriff sind. Den Teil der Bewegung, während dessen die Werkzeuge mit den Behältern in Eingriff stehen (können), nennt man im Allgemeinen "Nutzhub".

Es gibt aber auch spezielle Prozessschritte, die beispielsweise eine rotierende Arbeitsbewegung der linearen Bewegung überlagert ausführen, z.B. Fräsen, Bördelrollen, Gewinderollen oder Sickenrollen.

Häufig wird bei diesen überlagerten Bewegungen die Linearbewegung der Vorrichtung in der Maschine genutzt, um durch Nutzen eines normalerweise unbeweglichen Anschlags in dem rotierenden Teilen des Werkzeugs eine Verlagerung von Formelementen oder anderen Bearbeitungselementen (z.B. Messern) zum zu bearbeitenden Werkstück hin zu erzeugen. Man spricht hierbei von einer "Aktivierung".

Es wurde gefunden, dass insbesondere solche rotierenden Prozesse einen Hauptfaktor für die Begrenzung der Produktionsgeschwindigkeit unterhalb der an sich möglichen maximalen Maschinengeschwindigkeit darstellen.

Dabei sind vornehmlich zwei Aspekte von Bedeutung, nämlich die Zeit, die die Vorrichtung innerhalb der linearen Bewegung hat, um den rotierenden Prozess über dem Behälter auszuführen, und die Geschwindigkeit, mit der die Vorrichtung auf den Behälter trifft, und dabei als Nebeneinflussfaktor das Gewicht, das dabei auf den Behälter trifft.

In bekannten Ansätzen besteht eine sehr einfache Form dieser Aktivierung darin, dass ein linear innerhalb der Vorrichtung beweglicher Teil der Vorrichtung vor Erreichen des Totpunktes der Maschinenbewegung auf den teilweise oder komplett geformten Behälter trifft, von diesem gestoppt wird und dann relativ zur an die Maschine gekoppelten Vorrichtung verschoben wird. Diese Verschiebung wird dann über eine Kurve in meist radiale Bewegung von Formelementen umgesetzt, um den eigentlichen Arbeitsschritt der Vorrichtung auszuführen. Üblicherweise reicht dabei die Fliehkraft der rotierenden Form- oder anderer Arbeitselemente aus, um während Vor- und Rückhubs an die außen liegende Steuerkurve gepresst zu werden.

Es ist klar, dass mit steigender Geschwindigkeit der Maschinen die Belastungen, denen bei einem solchen Ansatz der Behälter standhalten muss, steigen und dass die Zeit zum Ausführen des Arbeitsschrittes kürzer wird.

Eine weitere Möglichkeit, die für schwerere Vorrichtungen genutzt wird, ist ein externer Anschlag, gegen den ein Teil der axial nach hinten oder vorne verlängerten Vorrichtung schlägt oder auch ein seitlich wirkender Anschlag, der so die Funktion des Behälters übernimmt. Das hat zwar zum Einen zur Folge, dass der Behälter nicht mehr den Reaktionskräften aus der Verzögerung ausgesetzt ist, so dass man also höhere Taktzahlen erreichen kann, zum Anderen ist aber ein so erzeugtes Formelement nicht mehr relativ zum Behälter sondern relativ zum Anschlag positioniert. Unabhängig von damit ggf. verbundenen Empfindlichkeit gegenüber Längenschwankungen des Behälters, die ggf. kontrollierbar ist, entstehen hier durch den Aufschlag der ganzen Masse auf den Anschlag hohe Belastungen, sowohl im Anschlag als auch in der Maschine.

Eine Dämpfung dieses Aufschlages ist z.B. mit einem Luftdämpfer möglich, der auch noch den Vorteil hat, dass seine Dämpferwirkung mit der Geschwindigkeit steigt. Solche Systeme sind allerdings schwer auszulegen bzw. zu kontrollieren, da kleinste Veränderungen im Spaltmass oder in der Temperatur zu Änderungen im Dämpferverhalten führen. Das Problem liegt dabei weniger im Dämpferverhalten selbst als in einer möglichen Verschiebung der Aktivierung an einen anderen Ort, so dass nicht ausreichend sichergestellt werden kann, dass der eigentliche Arbeitsvorgang der Vorrichtung am gewünschten Ort (hinsichtlich des Behälters) stattfindet.

Ein anderer Ansatz jüngeren Datums sieht vor, dass ein aktiver Antrieb zwischen Vorrichtung und Maschine gesetzt wird, der die ganze Vorrichtung so relativ zur Maschine bewegt, dass die Auftreffgeschwindigkeit der Vorrichtung auf den Behälter trotz höherer Maschinentaktzahl reduziert wird.

Auch hier gibt es Grenzen, die insbesondere in der installierbaren Leistung, dem Bauraum und dem Leistungsgewicht solcher aktiven Antriebe begründet sind.

In eine ähnliche Richtung gehen Überlegungen, bei denen die Bewegung von solchen rotierenden Vorrichtungen komplett von der Maschine entkoppelt wird und separat erfolgt.

Aber auch hier gibt es Grenzen, die im Bauraum, der Verstellbarkeit und Vibrationsanfälligkeit durch die Rotation der Vorrichtung begründet sind. Außerdem ist eine Nachrüstung zur Geschwindigkeitssteigerung aufwändig und teuer.

Es kann davon ausgegangen werden, dass, bezogen auf heutige schnell laufende Maschinen, die Leistungsbegrenzung infolge der der linearen Bewegung überlagerten Bearbeitungen, die ein Abbremsen (und späteres Beschleunigen) eines Vorrichtungsanteils nötig machen, immer noch bei 60 - 80 % der an sich machbaren maximalen Maschinengeschwindigkeit liegt.

Ein der vorliegenden Erfindung zugrundeliegendes Ziel ist es, die oben erläuterten Beschränkungen und Nachteile zu vermeiden und eine Möglichkeit zu bieten, die Leistungsgrenzen der Bearbeitungsmaschinen selbst nutzbar zu machen.

Es ist daher gewünscht, eine Lösung vorzustellen, bei der eine Bearbeitungseinrichtung und das entsprechende Verfahren zur Bearbeitung mit relativ bewegten Werkzeugen nicht mehr allein durch die mit der relativen Bewegung der Werkzeuge, insbesondere gegenüber zu bearbeiten Elementen, verbundenen Grenzen in der Leistungsfähigkeit beschränkt sind.

Erfindungsgemäß wird nach einem ersten Aspekt eine Bearbeitungseinrichtung für ein zu bearbeitendes Element, insbesondere einen Metallbehälter, vorgeschlagen, wie sie in Anspruch 1 definiert ist, nämlich mit einer Bewegungseinheit, die für eine insbesondere zyklische Bewegung ausgestaltet ist, einer Bearbeitungseinheit, die zumindest entlang der Bewegungsrichtung der Bewegungseinheit innerhalb der Bearbeitungseinrichtung beweglich gegenüber der Bewegungseinheit ausgestaltet ist und die für eine Bearbeitung des zu bearbeitenden Elements mit einer im Vergleich zur Bewegungseinheit verringerten, insbesondre auf null verringerten, Relativgeschwindigkeit entlang der Bewegungsrichtung gegenüber dem zu bearbeitenden Element ausgestaltet ist, und einem Steuerelement, wobei die Bewegungseinheit mit einer Beschleunigungseinheit versehen ist, wobei das Steuerelement und die Beschleunigungseinheit so ausgestaltet sind, dass mit einer Relativbewegung der Bewegungseinheit gegenüber dem Steuerelement mechanisch eine Bewegung zumindest eines Teils der Beschleunigungseinheit mit zumindest einem Anteil quer zur Bewegungsrichtung der Bewegungseinheit verbunden ist, und wobei die Beschleunigungseinheit so ausgestaltet ist, dass mit der Bewegung zumindest des Teils der Beschleunigungseinheit mechanisch eine Bewirkung einer Relativbeschleunigung der Bearbeitungseinheit gegenüber der Bewegungseinheit entlang der Bewegungsrichtung der Bewegungseinheit verbunden ist.

Erfindungsgemäß wird nach einem zweiten Aspekt ein Verfahren zur Bearbeitung eines zu bearbeitenden Elements, insbesondere eines Metallbehälters, vorgeschlagen, wie es in Anspruch 10 definiert ist, nämlich mit den Schritten eines Bewegens, insbesondere zyklischen Bewegens, einer Bewegungseinheit und eines Bearbeitens des zu bearbeitenden Elements mit einer im Vergleich zur Bewegungseinheit verringerten, insbesondre auf null verringerten, Relativgeschwindigkeit entlang der Bewegungsrichtung gegenüber dem zu bearbeitenden Element durch eine zumindest entlang der Bewegungsrichtung der Bewegungseinheit innerhalb der Bearbeitungseinrichtung beweglich gegenüber der Bewegungseinheit ausgestaltete Bearbeitungseinheit, wobei das Verfahren ferner ein mechanisches Bewirken einer Bewegung zumindest eines Teils einer Beschleunigungseinheit der Bewegungseinheit mit zumindest einem Anteil quer zur Bewegungsrichtung der Bewegungseinheit durch eine Relativbewegung der Bewegungseinheit gegenüber einem Steuerelement beim Bewegen der Bewegungseinheit und ein mechanisches Bewirken einer Relativbeschleunigung der Bearbeitungseinheit gegenüber der Bewegungseinheit entlang der Bewegungsrichtung der Bewegungseinheit durch die Bewegung zumindest des Teils der Beschleunigungseinheit umfasst.

Es wurde sich zum Ziel gesetzt, im Idealfall ohne Einsatz von Fremdenergie aus den im einfachsten Fall immer vorhandenen Komponenten der Maschinenbewegung und des Behälters Arbeitsbedingungen zu erzeugen, die etwa im Bereich der Erstellung von Aerosolbehältern oder dergleichen den Einsatz (z.B. rotierender) Vorrichtungen bis an die Leistungsgrenze der Maschine selbst zulassen. Auch wenn es besonders bevorzugt ist, dass keine Fremdenergie eingesetzt würde, ist dies nicht so zu verstehen, dass ein solcher Einsatz zwingend ausgeschlossen wäre.

Hierbei sollte - nach Möglichkeit bzw. Notwendigkeit - noch immer eine räumlich exakte Arbeitsweise des entsprechenden Systems machbar sein, so dass die Endzustände mit hoher Wiederholgenauigkeit immer am gleichen Ort eingenommen werden, wobei die Wiederholgenauigkeit in Ausgestaltungen der Erfindung auch durch sekundäre Maßnahme außerhalb des eigentlichen Erfindungsgedankens adressiert werden kann.

Ausgestaltungen der Erfindungen erlauben durch einen geringen Bauraum-Bedarf eine Nachrüstbarkeit bestehender Anlagen.

Die bisher bekannten Ansätze unter Nutzung von Anschlägen haben das Problem, dass die Bewegungsenergie zum Abstoppen der Vorrichtung entweder von dem zu bearbeitenden Behälter oder einem externen Anschlag aufgenommen werden muss. Dies reduziert die erreichbare Maximalgeschwindigkeit und die Lebensdauer der Vorrichtung. Die bekannten Ansätze unter Nutzung von Kompensationsbewegungen benötigen alle Zusatzenergie und müssen elektronisch gesteuert werden, wobei selbst damit im Allgemeinen die Grenzen bei der Maximalgeschwindigkeit noch nicht ausgereizt werden.

Die vorliegende Erfindung erlaubt eine Aufschlagenergiereduktion ohne aufwändige Komplexität der Anwendung durch eine geeignete Nutzung der Bewegungsabläufe und - vorgänge, die bereits angelegt sind, aber bisher noch nicht genutzt wurden.

In einer vorteilhaften Ausgestaltung eines Aspekts der Erfindung ist das Steuerelement Teil einer Aktivierungseinheit, die mit der Bewegungseinheit gekoppelt und zum Kontaktieren des zu bearbeitenden Elements ausgestaltet ist. In einer bevorzugten Variante dieser Ausgestaltung weist die Aktivierungseinheit eine geringere Masse als die Bearbeitungseinheit auf, insbesondere eine Masse von weniger als 50 % der Masse der Bearbeitungseinheit, vorzugweise eine Masse im Bereich von 5 % bis 40 % der Masse der Bearbeitungseinheit.

Mit dieser Ausgestaltung ist vorteilhafterweise eine Aktivierung möglich, die direkt an dem zu bearbeitenden Element innerhalb des bewegten Anteils der Vorrichtung erfolgen kann. In dieser Ausgestaltung wird der Kontaktvorgang zwischen dem zu bearbeitenden Element (z.B. einem metallischen Behälter) und der Bearbeitungseinrichtung (bzw. der Bearbeitungseinheit) in mindestens zwei Phasen unterteilt. In der ersten Phase trifft mit der Aktivierungseinheit ein vorzugweise gegenüber der eigentlichen Bearbeitungseinheit deutlicher leichterer Teil der Vorrichtung auf den Behälter. Die Masse und die Auftreffgeschwindigkeit dieses leichten Teils der Vorrichtung können so kalkuliert werden, dass sie durch den Aufprall zu keiner Beschädigung des Behälters führen. Nach diesem Erstkontakt gibt es also in der Bearbeitungseinrichtung Elemente, die sich relativ zueinander bewegen. Die Erfindung erlaubt es nun, über einen Bewegungsumlenkungsmechanismus aus der ersten Relativbewegung eine Beschleunigung der Bearbeitungseinheit als einem zweiten, in der Regel schwereren Vorrichtungsteil zu erzeugen, ohne dass die dabei entstehenden Reaktionskräfte, die auf den Behälter wirken so groß würden, dass er Schaden dabei nimmt.

In einer anderen vorteilhaften Ausgestaltung eines Aspekts der Erfindung umfasst die Bearbeitungseinrichtung eine Halteeinrichtung für das zu bearbeitende Element, wobei das Steuerelement Teil einer Aktivierungseinheit ist, die zumindest entlang der Bewegungsrichtung der Bewegungseinheit ortsfest gegenüber der Halteeinrichtung angeordnet ist.

Selbst bei einer kompletten Neuauslegung können Randbedingungen bestehen, die eine Ausgestaltung, bei der die Aktivierungseinheit mit der Bewegungseinheit gegenüber dem zu bearbeitenden Element mitbewegt wird, nicht oder nur schwierig möglich ist. Dies kann umso mehr gelten, wenn eine existierende Bearbeitungseinrichtung im Sinne der Erfindung umgerüstet wird. Insbesondere für solche Fälle, erlaubt die Erfindung auch eine andere Art der Geschwindigkeitsbeeinflussung. Hierbei wird die Manipulation nicht durch Erzeugen einer Relativbewegung zweier Teile zueinander innerhalb des Komplexes der Bewegungseinheit selbst erreicht, sondern durch Steuern einer externen Manipulationsvorrichtung im Zusammenspiel mit der Hauptbewegung und einem externen Anschlag.

Es ist zu bemerken, dass die Erfindung auch eine gestaffelte Beschleunigungseinwirkung vorsieht, so dass beispielsweise mit Hilfe eines gegenüber dem zu bearbeitenden Element ortfesten ersten Steuerelements und einer entsprechenden ersten Beschleunigungseinheit auf eine Kombination einer Steuereinrichtung mit einem zweiten Steuerelement und einer entsprechenden zweiten Beschleunigungseinheit eingewirkt wird, wobei diese derart beschleunigte (z.B. in der einen Bewegungsrichtung abgebremste) Kombination wiederum beschleunigend (z.B. weiter abbremsend) auf die Bearbeitungseinheit einwirkt, wobei die Steuereinrichtung auf dem zu bearbeitenden Behälter ruht.

In einer anderen vorteilhaften Ausgestaltung eines Aspekts der Erfindung weist die Beschleunigungseinheit ein Abgriffselement auf, das mit dem Steuerelement als einem Kurventräger ein Kurvengetriebe bildet, wobei die Beschleunigungseinheit für die mechanische Bewirkung der Relativbeschleunigung auf die Bearbeitungseinheit durch insbesondere eine Hebelwirkung einer Bewegung des Abgriffselements ausgestaltet ist.

Im Rahmen der Erfindung kann, z.B. im Zusammenhang mit der mit der Bewegungseinheit gekoppelten Aktivierungseinheit vorgesehen sein, dass auf dem zunächst relativ zur Vorrichtung bewegten Teil eine Steuerkurve ist bzw. werden mehrere auf dem Umfang verteilte Steuerkurven angebracht sind (im Fall einer gegenüber dem zu bearbeitenden Element ortfesten Aktivierungseinheit gilt entsprechendes). Diese Steuerkurve läuft dann beispielsweise, während sich der erste Teil noch alleine bewegt, unter einem Kontaktelement eines Hebels durch, der selber drehbar gelagert ist und der durch die Form der Steuerkurve um diesen Drehpunkt verlagert wird. Diese vorwiegend radiale Verlagerung wird in dem Hebel an anderer Stelle in axiale Bewegung übersetzt und dort über ein weiteres Kontaktelement auf den zweiten, üblicherweise schwereren Teil der Vorrichtung, nämlich die Bearbeitungseinheit, übertragen. Während die Geschwindigkeitsänderung des ersten, leichten Teils der Vorrichtung (der Aktivierungseinheit) schlagartig mit Auftreffen auf dem Behälter erfolgt, kann die Geschwindigkeitsänderung des zweiten Teils (der Bearbeitungseinheit) durch diese Ausgestaltung der Erfindung über einen definierten Bereich gedehnt werden, so dass die daraus resultierenden Impulskräfte stark reduziert werden. Durch geeignete Auslegung der Steuerkurven und der Hebelgeometrie ist es außerdem möglich, dass nach einer definierten Beschleunigungsphase des zweiten Teils das erste Teil nahezu ohne Geschwindigkeitsdifferenz - also nahezu ruckfrei direkten Kontakt zum zweiten Teil bekommt und seine Bewegung 1:1 auf das zweite Teil übertragen kann.

In einer vorteilhaften Ausgestaltung der Erfindung ist dieser Drehpunkt relativ fix zur Maschinenbewegung in der Bearbeitungseinrichtung gelagert.

In einer bevorzugten Variante der obigen Ausgestaltung ist das Abgriffselement mit einer Führung am Kurventräger entlang geführt und/oder ist das Abgriffselement mit einer Feder versehen, die das Abgriffselement auf den Kurventräger drückt.

In einer anderen vorteilhaften Ausgestaltung eines Aspekts der Erfindung überträgt die Beschleunigungseinheit ausschließlich kinetische Energie von der Bewegungseinheit ausschließlich an die Bearbeitungseinheit und ausschließlich kinetische Energie von der Bearbeitungseinheit ausschließlich an die Bewegungseinheit.

In einer anderen vorteilhaften Ausgestaltung eines Aspekts der Erfindung ist die Bearbeitungseinheit für eine rotierende Bearbeitung des zu bearbeitenden Elements um eine Achse, insbesondre um eine zur Bewegungsrichtung der Bewegungseinheit parallele Achse, ausgestaltet, insbesondere für ein Fräsen, Bördelrollen, Gewinderollen und/oder Sickenrollen.

In einer anderen vorteilhaften Ausgestaltung eines Aspekts der Erfindung ist die Bewegung der Bewegungseinheit eine zyklische Bewegung mit einer Hin-Bewegung und einer Her-Bewegung, wobei die Hin-Bewegung für eine Bewegung der Bearbeitungseinheit zu dem zu bearbeitenden Element vorgesehen ist und die Relativbeschleunigung der Bearbeitungseinheit gegenüber der Bewegungseinheit ein Abbremsen der Bearbeitungseinheit umfasst, wobei die Her-Bewegung für eine Bewegung der Bearbeitungseinheit von dem zu bearbeitenden Element weg vorgesehen ist und die Relativbeschleunigung der Bearbeitungseinheit gegenüber der Bewegungseinheit eine Beschleunigung der Bearbeitungseinheit umfasst.

Merkmale vorteilhafter Ausführungsformen der Erfindung sind insbesondere in den Unteransprüchen definiert, wobei weitere vorteilhafte Merkmale, Ausführungen und Ausgestaltungen für den Fachmann zudem aus den obigen Erläuterung und der folgenden Diskussion zu entnehmen sind.

Im Folgenden wird die vorliegende Erfindung anhand von in den Figuren dargestellten Ausführungsbeispielen weiter illustriert und erläutert. Hierbei zeigt
- Fig. 1: schematische Darstellungen zur Illustration eines ersten Ausführungsbeispiels einer erfindungsgemäßen Bearbeitungseinrichtung,
- Fig. 2: schematische Darstellungen zur Illustration eines zweiten Ausführungsbeispiels einer erfindungsgemäßen Bearbeitungseinrichtung,
- Fig. 3: ein schematisches Ablaufdiagramm eines Ausführungsbeispiels des erfindungsgemäßen Verfahrens zur Bearbeitung
- Fig. 4: schematische Darstellungen zur Illustration eines dritten Ausführungsbeispiels einer erfindungsgemäßen Bearbeitungseinrichtung,
- Fig. 5: eine schematische Darstellung zur Illustration eines vierten Ausführungsbeispiels einer erfindungsgemäßen Bearbeitungseinrichtung,
- Fig. 6: schematische Darstellungen zur Illustration eines fünften Ausführungsbeispiels einer erfindungsgemäßen Bearbeitungseinrichtung, und
- Fig. 7: eine schematische Darstellung zur Illustration eines sechsten Ausführungsbeispiels einer erfindungsgemäßen Bearbeitungseinrichtung.

In den beiliegenden Zeichnungen sowie den Erläuterungen zu diesen Zeichnungen sind einander entsprechende bzw. in Beziehung stehende Elemente - soweit zweckdienlich - mit jeweils entsprechenden oder ähnlichen Bezugszeichen gekennzeichnet, auch wenn sie in unterschiedlichen Ausführungsbeispielen zu finden sind.

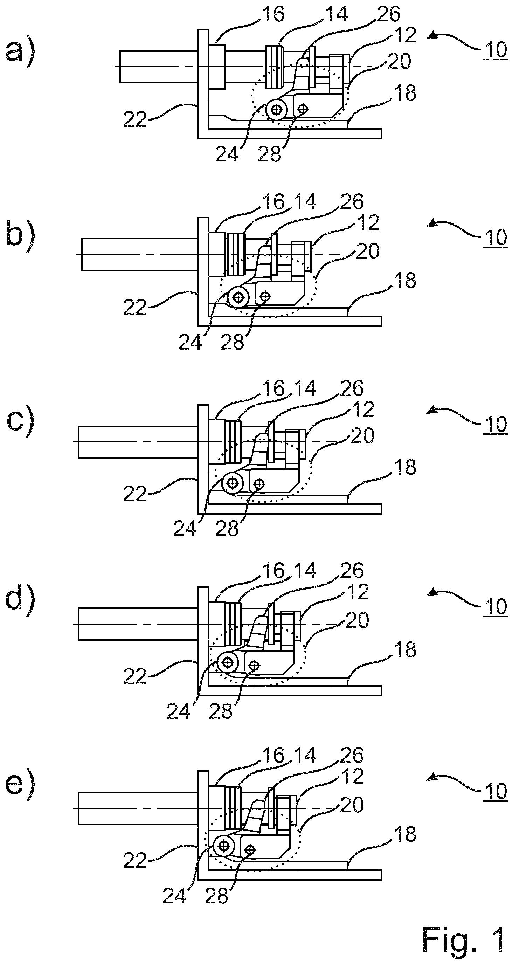

Fig. 1 zeigt schematische Darstellungen zur Illustration eines ersten Ausführungsbeispiels einer erfindungsgemäßen Bearbeitungseinrichtung 10. Genauer zeigen die Teilfiguren 1 a) bis 1 e) jeweils verschiedene Zustände im Bewegungsablauf der Bearbeitungseinrichtung 10.

Die Bearbeitungseinrichtung 10 umfasst eine Bewegungseinheit 12, eine Bearbeitungseinheit 14, ein Steuerelement 18, eine Beschleunigungseinheit 20, eine Halteeinrichtung 22, ein Abgriffselement 24, einen Hebel 26 und eine Schwenkachse 28.

Die Halteeinrichtung 22 ist mit einem Anschlag 16 für die Bearbeitungseinheit 14 versehen, wobei das zu bearbeitende Elements (hier nicht gezeigt; gegenüber den Darstelllungen von Fig. 1 links angeordnet) mit der Bearbeitungseinheit 14 beim Anschlagen an bzw. Aufsetzen auf den Anschlag 16 (oder ggf. bereits kurz davor) in Kontakt kommt.

An der Halteeinrichtung 22 ist das Steuerelement 18 in Form eines Kurventrägers angebracht, so dass die Halteeinrichtung 22 in dieser Hinsicht auch als eine das Steuerelement 18 tragende Steuereinrichtung angesehen werden kann.

Mit dem Steuerelement 18 befindet sich das Abgriffselement 24 in Kontakt, das mit dem Hebel 26 verbunden ist, so dass eine Bewegung des Abgriffselements 24 (hervorgerufen durch das Steuerelement 18) zu einem Schwenken des Hebels 26 um die Schwenkachse 28 führt.

Die Bearbeitungseinheit 14 wird zwar von der Bewegungseinheit 12 getragen, ist allerdings gegenüber der Bewegungseinheit entlang deren Bewegungsrichtung beweglich vorgesehen.

Das Abgriffselement 24 und der Hebel 26 mit seiner Schwenkachse 28 sind Teil der Beschleunigungseinheit 20, die an der Bewegungseinheit 12 vorgesehen ist.

Fig. 1 a) zeigt die Bearbeitungseinrichtung 10 in einem Zustand, in dem die Bearbeitungseinheit 14 von dem zu bearbeitenden Element entfernt ist (z.B. eine Extremstellung eines Hubs der Bewegungseinheit 12, die sich in der Darstellung von Fig. 1 in ihrer zyklischen Bewegung von rechts nach links und wieder zurück bewegt.

In Fig. 1 b) befindet sich die Bearbeitungseinheit 14 infolge der Bewegung der Bewegungseinheit 12 nach links kurz vor dem Anschlag 16 (und damit in Ihrer Fortsetzung nach links außerhalb der Darstellung kurz vor dem zu bearbeitenden Element). Zudem befindet sich auch das Abgriffselement 24 in Längsrichtung des Steuerelements 18 kurz vor dem Beginn einer Kurve, durch die das Abgriffselement 24 abgelenkt wird (in der Zeichnungsdarstellung nach oben).

In Fig. 1 c) ist erkennbar, das durch die gegenüber Fig. 1 b) fortgesetzte Bewegung der Bewegungseinheit 12 nach links das Abgriffselement 24 von der Kurve des Steuerelements 18 nach oben bewegt wurde, wobei diese Bewegung durch das entsprechende Schwenken des Hebels 26 um die Schwenkachse 28 in eine Bewegung des dem Abgriffselement 24 gegenüber liegenden Endes des Hebels 26 umgesetzt wird, wobei diese Ende des Hebels auf die Bearbeitungseinheit 14 zu deren Abbremsung gegenüber dem Anschlag 16 einwirkt.

Fig. 1 d) entspricht hierbei der Fortsetzung von Fig. 1 c), wobei in Fig. 1 d) das Abgriffselement 24 am Ende der Kurve des Steuerelements 18 angelangt ist, so dass damit auch das Schwenken des Hebels 26 endet, wobei durch die Kombination der Schwenkbewegung des Hebels 26 und der Bewegung der Bewegungseinheit 12 die Bearbeitungseinheit mit einer gegenüber der Geschwindigkeit der Bewegungseinheit 12 verringerten Geschwindigkeit auf den Anschlag 16 (und damit auf das hier nicht gezeigte zu bearbeitende Element) auftrifft.

Die Kurve des Steuerelements 18 stellt keinen harten Anschlag dar, so dass das Aufsetzen der Bearbeitungseinheit 14 auf dem Anschlag 16 mit einem gewissen Rest-Impuls erfolgen kann, der dann so dimensioniert ist, dass das zu bearbeitende Element davon nicht beschädigt wird. Es kann allerdings auch vorsehen sein, dass der Hebel 26 zum Stehen kommt, so dass der Hebel 26 selbst als Anschlag wirkt. Alternativ zur in Fig. 1 gezeigten Ausgestaltung, in der Anschlag 16 vorgesehen ist, kann auch auf einen solchen Anschlag verzichtet werden, wobei die Bearbeitungseinheit 14 damit auch direkt auf das zu bearbeitende Element abgesetzt werden kann. In allen diesen Fällen kann die Kurve des Steuerelements 18 im Zusammenspiel mit der Beschleunigungseinheit 20 so ausgelegt werden, dass das Aufsetzen der Bearbeitungseinheit 14 auf das zu bearbeitende Element mit einem Rest-Impuls von (praktisch) Null erfolgt.

In Fig. 1 e) ist zu erkennen, dass sich der Hebel 26 durch die Weiterbewegung des Bewegungselements 12 von Bearbeitungseinheit 14 entfernt hat, wobei die Position des Bewegungselements 12 beispielsweise die die der Stellung aus Fig. 1 a) gegenüberliegende Extremposition des Hubs sein kann.

Anhand der Fig. 1 a) bis 1 e) ist auch die umgekehrte Bewegung und der entsprechende Vorgang innerhalb der Bearbeitungseinrichtung 10 zu erkennen.

Bei einer Bewegung der Bewegungseinheit 12 nach rechts folgt das Abgriffselement 24 der Kurve des Steuerelements 18, so dass das dem Abgriffselement 24 gegenüberliegende Ende des Hebels 26 gegenüber der Bewegung des Bewegungselements 12 zurückbleibt, vorzugsweise etwa im Bereich des Inkontaktkommens mit der Bearbeitungseinheit 14 gegenüber diesem nahezu stillsteht. Bei einer weiteren Bewegung des Bewegungselements 12 holt das Ende des Hebels 26 durch die weitere Steuerung über die Kurve des Steuerelements 18 gegenüber dem Bewegungselement als Ganzem in der (absoluten) Geschwindigkeit auf, so dass bei einem Mitnehmen der Bearbeitungseinheit 14 diese keine große ruck-artige Beschleunigung sondern eine über einen längeren Zeitraum ausgedehnte in ihrem Betrag kleinere Beschleunigung erfährt.

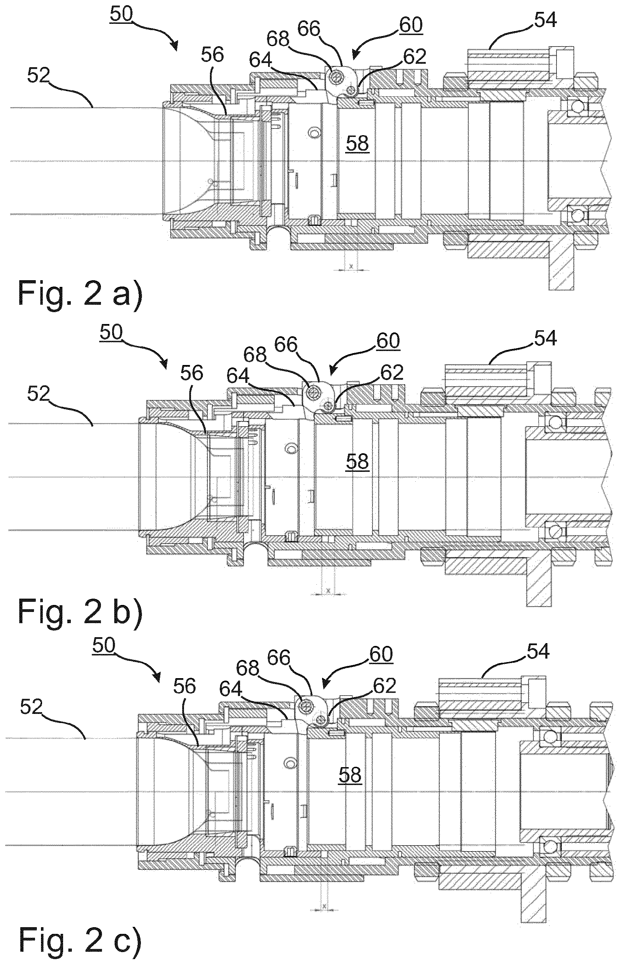

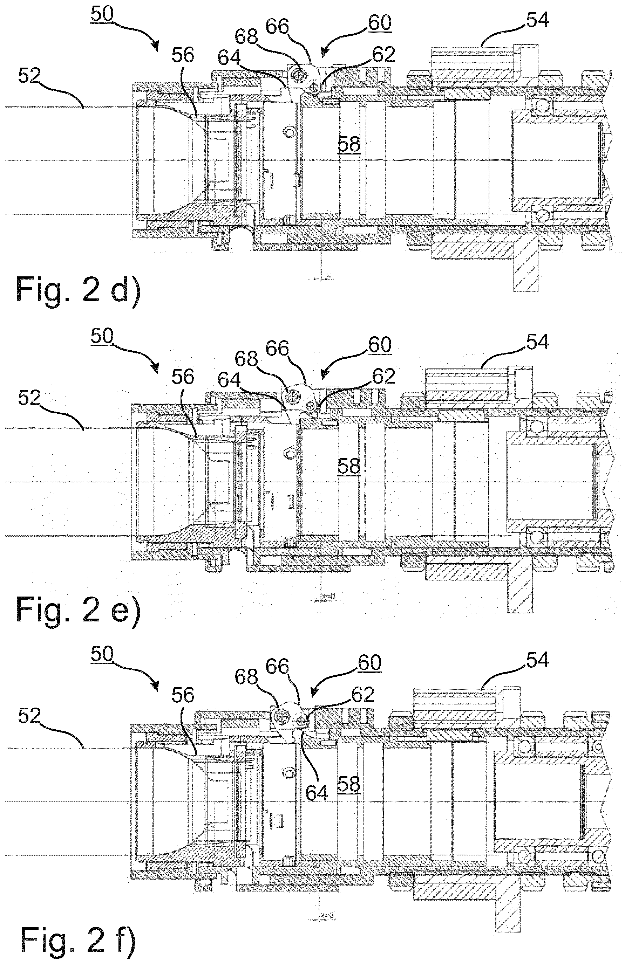

Fig. 2 zeigt schematische Darstellungen zur Illustration eines zweiten Ausführungsbeispiels einer erfindungsgemäßen Bearbeitungseinrichtung 50. Genauer zeigen die Teilfiguren 2 a) bis 2 f) jeweils verschiedene Zustände im Bewegungsablauf der Bearbeitungseinrichtung 50.

Die Bearbeitungseinrichtung 50 umfasst eine Bewegungseinheit 54, eine Aktivierungseinheit 56 mit einem Steuerelement 64, eine Bearbeitungseinheit 58 und eine Beschleunigungseinheit 60 mit einem Abgriffselement 62, einem Hebel 66 und eine Schwenkachse 68.

Die Aktivierungseinheit 56 ist hier - anders als im Fall von Fig. 1 - dazu vorgesehen, bei der Bewegung der Bearbeitungseinrichtung auf einem zu bearbeitenden Element 52 (hier in Form einer Flasche) aufzusetzen, so dass eine definierte Beziehung zwischen der End-Position des zu bearbeitenden Elements 52 und dem Steuerelement 64 der Aktivierungseinheit ungeachtet einer sonstigen Dimensionierung oder Positionierung des zu bearbeitenden Elements 52 gegeben ist.

Die Funktionsweise und das Zusammenspiel von Steuerelement 64 (mit einer Kurve), Abgriffselement 62, Hebel 66 und Schwenkachse 68 entsprechen ansonsten denen bereits mit Bezug auf Fig. 1 diskutierten Aspekten, so dass hier nicht näher darauf eingegangen werden muss. Es sei darauf hingewiesen, dass in den Darstellung von Fig. 2 der Hebel "durchsichtig" dargestellt ist, um den Verlauf der Kurve des Steuerelements 64 nicht zu verdecken.

Fig. 2 a) zeigt die Bearbeitungseinrichtung 50 in einer Position entfernt von dem zu bearbeitenden Element 52. In Fig. 2 b) ist die Aktivierungseinheit 56 auf das zu bearbeitende Element 52 aufgesetzt. In Fig. 2 c) ist anhand des Abstands zwischen der Aktivierungseinheit 56 und der Bearbeitungseinheit 58 ("x") erkennen, dass sich die Bearbeitungseinheit 58 gemeinsam mit der Bewegungseinheit 54 weiter bewegt hat. In Fig. 2 d) ist gezeigt, dass der Hebel 66 durch die Ablenkung des Abgriffselements 62 an der Kurve des Steuerelements 64 um die Schwenkachse 68 geschwenkt ist, und damit auf die Bearbeitungseinheit 58 beschleunigend (mit negativer Beschleunigung gegenüber der Bewegungseinheit 54, also abbremsend) einzuwirken. Aus dem Vergleich von Fig. 2 c) und 2 d) ist zu erkennen, dass dementsprechend die Bearbeitungseinheit 58 gegenüber der Bewegungseinheit 54 zurückbleibt. In Fig. 2 e) ist die Situation gezeigt, dass die Bearbeitungseinheit 58 auf der Aktivierungseinheit 56 (und damit auf dem zu bearbeitenden Element 52) aufsetzt ("x=0"), wobei Fig. 2 f) eine spätere Stellung zeigt, bei der sich die Bewegungseinheit 54 gegenüber der Bearbeitungseinheit 58 soweit weiterbewegt hat, dass der Hebel 66 von der Bearbeitungseinheit 58 gelöst ist.

Auch die oben zu Fig. 1 erläuterte kinematische Umkehrung bei einer Bewegung in die entgegengesetzte Richtung gilt hier analog.

Die Überlegungen, die bei der Auslegung der Kurvenführung (im Zusammenspiel mit der restlichen Mechanik etwa der Beschleunigungseinheit) anzustellen sind, umfassen, dass idealerweise erreicht werden soll, dass der abbremsende Abschnitt (etwa das Ende des Hebels 26 in Fig. 1) eine gewünschte (maximale) Geschwindigkeit entlang der Bewegungsrichtung der Bewegungseinheit (bei einer Dose als einem Beispiel eines zu bearbeitenden Elements in dosenaxialer Richtung von der Dose weg) aufweist, die die Überfahrgeschwindigkeit über die Kurve (gerade/genau oder zumindest zu einem wesentlichen Teil) aufhebt, so dass es durch die Kombination bzw. Überlagerung der Bewegungen im Extremfall zu einem Stillstand (aber zumindest zu einer wesentlich verringerten Kontaktgeschwindigkeit) kommt. Der entsprechende Punkt für diesen Stillstand bzw. die im Betrag minimale Geschwindigkeit ist dabei so einzustellen, dass hierbei die Bearbeitungseinheit mit einem Anschlag oder dem zu bearbeitenden Element in Kontakt kommt.

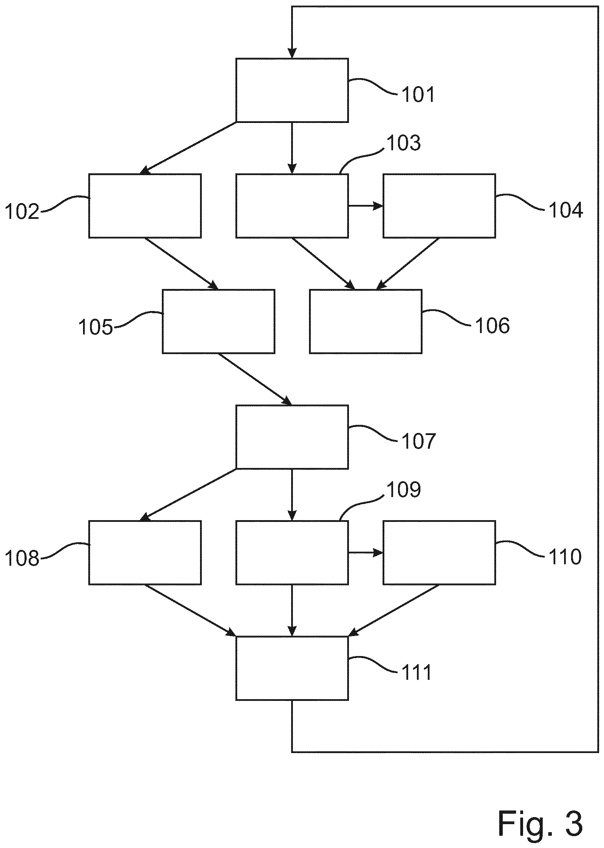

Fig. 3 zeigt ein schematisches Ablaufdiagramm eines Ausführungsbeispiels des erfindungsgemäßen Verfahrens zur Bearbeitung.

Das Verfahren umfasst zunächst ein Bewegen 101 der Bewegungseinheit als Ganzem mit den entsprechenden Einheiten.

In Schritt 102 wird dieses Bewegen fortgesetzt, wobei es allerdings parallel zu einem mechanischen Bewirken 103 einer Bewegung zumindest eines Teils einer Beschleunigungseinheit der Bewegungseinheit mit zumindest einem Anteil quer zur Bewegungsrichtung der Bewegungseinheit durch eine Relativbewegung der Bewegungseinheit gegenüber einem Steuerelement kommt, wobei wiederum durch die Bewegung zumindest des Teils der Beschleunigungseinheit in Schritt 104 mechanisch eine Relativbeschleunigung der Bearbeitungseinheit gegenüber der Bewegungseinheit entlang der Bewegungsrichtung der Bewegungseinheit bewirkt wird.

Mit den Schritten 103 und 104 kommt die Bearbeitungseinheit mit einem verringerten Stoß auf dem zu bearbeitenden Element an (siehe etwa Fig. 1 d) oder 2 e)), so dass eine Bearbeitung des zu bearbeitenden Elements in Schritt 106 möglich ist, während sich die Bewegungseinheit in Schritt 105 weiterhin bewegt.

Mit Schritt 107 wird die Bewegungsrichtung der Bewegungseinheit umgekehrt.

In Schritt 108 wird auch dieses Bewegen fortgesetzt, wobei es allerdings parallel zu einem mechanischen Bewirken 109 einer Bewegung zumindest eines Teils einer Beschleunigungseinheit der Bewegungseinheit mit zumindest einem Anteil quer zur Bewegungsrichtung der Bewegungseinheit durch eine Relativbewegung der Bewegungseinheit gegenüber einem Steuerelement kommt, wobei wiederum durch die Bewegung zumindest des Teils der Beschleunigungseinheit in Schritt 110 mechanisch eine Relativbeschleunigung der Bearbeitungseinheit gegenüber der Bewegungseinheit entlang der Bewegungsrichtung der Bewegungseinheit bewirkt wird. Mit anderen Worten kommt es hier zu einem Abfangen, da die Beschleunigungseinheit mit ihrer Bewegung beginnt, bevor es zu einem Kontakt von Anschlag/zu bearbeitendem Element und Bearbeitungseinheit kommt.

Die Bewegung bzw. Beschleunigung in den Schritten 109 und 110 ist jeweils der Bewegung bzw. Beschleunigung in den Schritten 103 und 104 entgegengesetzt.

In Schritt 111 erfolgt wiederum eine Bewegung der Bewegungseinheit als Ganzem, allerdings in einer Richtung entgegensetzt zu der von Schritt 101. Nach einer Umkehr am anderen Hubende kann das Verfahren fortgesetzt werden.

Auch wenn das Verfahren hier mit dem Bewegen 101 als Ausgangspunkt beschrieben ist, ist die Erfindung nicht hierauf beschränkt. Es ist insbesondere möglich, mit den Schritten 107 - 111 zu beginnen, mit den Schritten 101 - 106 fortzusetzen und diesen Zyklus dann wieder mit Schritt 107 und den folgenden Schritten fortzusetzen.

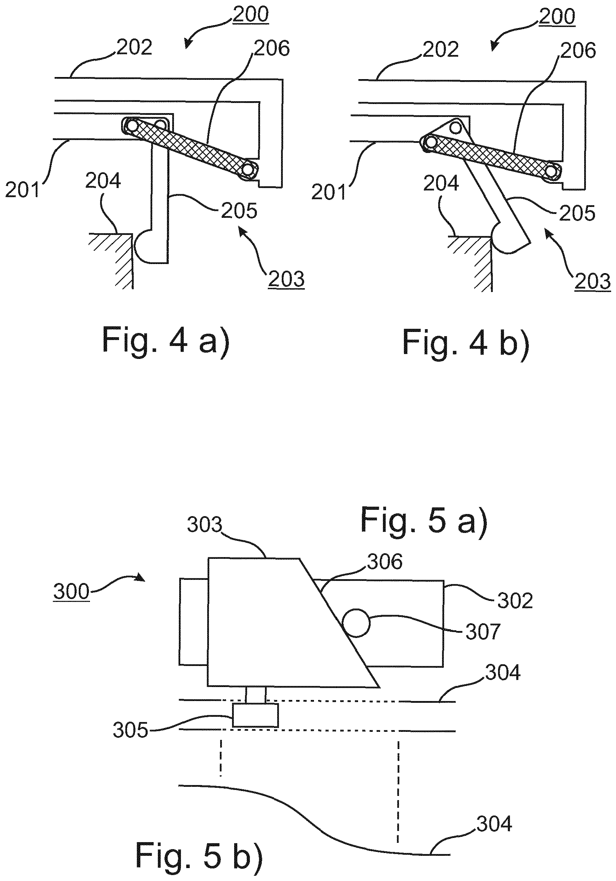

Fig. 4 zeigt schematische Darstellungen zur Illustration eines dritten Ausführungsbeispiels einer erfindungsgemäßen Bearbeitungseinrichtung. Die Darstellung der Bearbeitungseinrichtung 200 dieses Ausführungsbeispiels ist auf die hier zur Erläuterung relevanten Aspekte beschränkt.

Die Bearbeitungseinrichtung 200 umfasst eine Bewegungseinheit 201 und eine Bearbeitungseinheit 202, die über eine Beschleunigungseinheit 203 miteinander gekoppelt sind.

In Fig. 4 a) ist eine Position bzw. Stellung der Bearbeitungseinrichtung 200 gezeigt, bei der ein Kontakthebel 205 gerade noch nicht (bei einer Bewegung der Bewegungseinheit 201 nach links bzw. bei einer Bewegung der Bewegungseinheit 201 nach rechts gerade nicht mehr) im Kontakt mit einem als Anschlag ausgelegten Steuerelement 204 ist.

Der Kontakthebel 205 ist in L-Form ausgebildet und ist in der Ecke seiner Schenkel schwenkbar mit der Bewegungseinheit 201 verbunden. Der längere der beiden Schenkel ist dazu vorgesehen, mit dem Steuerelement 204 in Kontakt zu kommen.

Am Ende des kürzeren der Schenkel des Kontakthebels 205 ist ein Arm 206 schwenkbar angebracht, der wiederum seinerseits schwenkbar mit der Bearbeitungseinheit 202 verbunden ist.

In Fig. 4 b) ist eine Darstellung gezeigt, bei der das Ende des Kontakthebels 205 bei einer Bewegung der Bewegungseinheit 201 nach links infolge des Kontakts mit dem Steuerelement 204 zurückgeblieben ist. Hierbei ist der Kontakthebel 205 gegenüber der Bewegungseinheit 201 verschwenkt, wobei dieses Verschwenken durch die Kopplung über den Arm 206 in einer Relativbewegung der Bearbeitungseinheit 202 resultiert.

Fig. 5 zeigt eine schematische Darstellung zur Illustration eines vierten Ausführungsbeispiels einer erfindungsgemäßen Bearbeitungseinrichtung. Auch hier ist die Darstellung der Bearbeitungseinrichtung 300 dieses Ausführungsbeispiels ist auf die hier zur Erläuterung relevanten Aspekte beschränkt.

Die Bearbeitungseinrichtung 300 ist mit einer Bearbeitungseinheit 302 und einer Beschleunigungseinheit 303 (als Teil einer ansonsten nicht dargestellten Bewegungseinheit) versehen. Die Bearbeitungseinheit 302 weist einen im Wesentlichen zylinderförmigen Abschnitt auf, der hier innerhalb eines entsprechenden im Wesentlichen zylinderförmigen Abschnitts der Beschleunigungseinheit 303 angeordnet ist. Die Beschleunigungseinheit 303 weist eine schräge Flanke 306 auf, die hier im Kontakt mit einem Roller 307 der Bearbeitungseinheit 302 steht. Es ist ferner eine Steuerkurve 304 vorgesehen, die für eine Führung der Beschleunigungseinheit 303 über ein Abgriffselement 305 im Sinne einer Rotation der Beschleunigungseinheit 303 um deren Längsachse (waagerecht in der Zeichnungsebene von Fig. 5 a)) ausgestaltet ist. Die Steuerkurve 304, deren Abwicklung in Fig. 5 b) gezeigt ist, verläuft in einer Mantelfläche um die Bearbeitungseinheit 302 und die Beschleunigungseinheit 303 herum.

Wird die Beschleunigungseinheit 303 in der Darstellung von Fig. 5 a) nach links bewegt, bewirkt die Steuerkurve 304 aus Sicht von rechts entlang der Längsachse der Beschleunigungseinheit 303 eine Rotation der Beschleunigungseinheit 304 im Uhrzeigersinn. Da die Bearbeitungseinheit 302 hierbei so geführt ist, dass sie nicht mit der Beschleunigungseinheit 303 mit rotiert, ergibt sich durch das Abrollen der Rolle 307 an der Flanke eine Relativbewegung der Bearbeitungseinheit 302 gegenüber der Beschleunigungseinheit 303 nach rechts, so dass die Bearbeitungseinheit 302 hinsichtlich der Bewegung der Beschleunigungseinheit 303 nach links abgebremst wird.

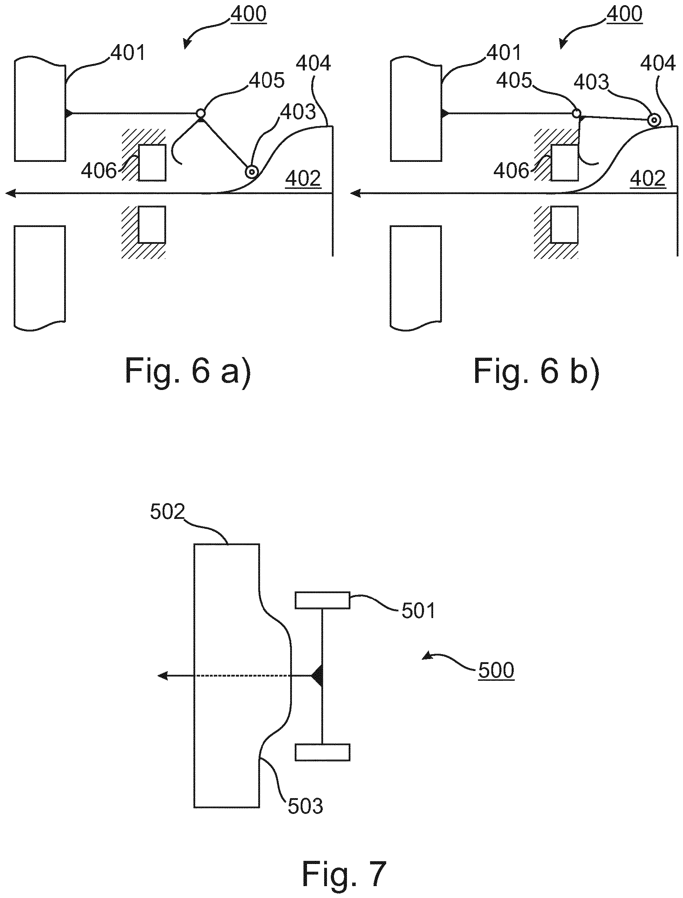

Fig. 6 zeigt schematische Darstellungen zur Illustration eines fünften Ausführungsbeispiels einer erfindungsgemäßen Bearbeitungseinrichtung. Auch hier ist die Darstellung der Bearbeitungseinrichtung 400 dieses Ausführungsbeispiels ist auf die hier zur Erläuterung relevanten Aspekte beschränkt.

Die Bearbeitungseinrichtung 400 umfasst neben der Bearbeitungseinheit 402, die mit einem Kurventräger 404 versehen ist, eine Bewegungseinheit 401, die mit einer schwenkbar angebrachten Kurvenrolle 403 versehen ist, wobei die Kurvenrolle 403 für eine Zusammenarbeit mit dem Kurventräger 404 ausgestaltet ist.

Die Kurvenrolle 404 wird von einem L-förmigen Träger 405 am Ende eines Schenkels gehalten, wobei das Ende des anderen Schenkels für an Anschlagen an einem Anschlag 406 vorgesehen ist.

Wie aus der Zusammenschau der Fig. 6 a) und 6 b) zu sehen ist, führt ein Anlaufen des Trägers bzw. dessen anderen Schenkelendes an den Anschlag 406 zu einem Verschwenken des Trägers, wobei dies wiederum über die Kurvenrolle 403 und den Kurventräger 404 zu einer relativen Bewegung der Bearbeitungseinheit 402 gegenüber der Bewegungseinheit 401 führt.

Fig. 7 zeigt eine schematische Darstellung zur Illustration eines sechsten Ausführungsbeispiels einer erfindungsgemäßen Bearbeitungseinrichtung. Auch hier ist die Darstellung der Bearbeitungseinrichtung 500 dieses Ausführungsbeispiels ist auf die hier zur Erläuterung relevanten Aspekte beschränkt.

Die Bearbeitungseinheit der Bearbeitungseinrichtung 500, von der hier nur die Bewegungsrichtung und eine Kurvenrolleneinheit 501 gezeigt ist, wird relativ zu einem koaxial mit der Bewegungsrichtung der Bearbeitungseinheit rotierenden Anschlag 502 mit einer Topfkurve 503 auf der der Kurvenrolleneinheit 501 zugewandten Seite bewegt. Die Rotation des Anschlags 502 ist hierbei so abgestimmt, dass die in ihrer Rotationslage zur Bewegungsrichtung der Bearbeitungseinheit festgelegte Kurvenrolleinheit 501 im Bereich einer Flanke der Topfkurve 503 mit dieser in Kontakt kommt und dann durch das Zusammenspiel von Rotation der Topfkurve 503, Form der Topfkurve 503 und Abrollen der Kurvenvolleinheit auf der unter ihr bewegten Kontur der Topfkurve 503 abgebremst wird. Entsprechendes gilt - in kinetischer Umkehrung - für eine Beschleunigung bei entgegengesetzter Bewegungsrichtung. Die Rotation des Anschlags 502 kann vorzugsweise unter Nutzung einer geeigneten Umsetzung von der Bewegung der Bewegungseinheit selbst bewirkt werden, wobei auch gesonderter Antrieb des Anschlags 502 möglich ist.

Auch wenn in den Figuren verschiedene Aspekte oder Merkmale der Erfindung jeweils in Kombination gezeigt sind, ist für den Fachmann - soweit nicht anders angegeben - ersichtlich, dass die dargestellten und diskutieren Kombinationen nicht die einzig möglichen sind. Insbesondere können einander entsprechende Einheiten oder Merkmalskomplexe aus unterschiedlichen Ausführungsbeispielen miteinander ausgetauscht werden.

Im Folgenden werden weitere Hinweise zu Aspekten der Erfindung gegeben.

Die Erfindung erlaubt einen Ansatz zur Manipulation von insbesondere achsparallelen Differenzgeschwindigkeiten von relativ zueinander bewegten Körpern im Moment des Aufeinandertreffens in Maschinen zum Bearbeiten von beispielsweise Metall-Containern, wobei durch ein vorteilhafterweise rein mechanisches System die Geschwindigkeit eines Teils der Vorrichtung so verändert (insbesondere verzögert) wird, das auftretende Impulse beim Aufeinandertreffen minimiert werden. Hierbei können die beiden Bewegungsteile achsparallel angeordnet sein, wobei vorzugweise für die Beeinflussung der Bewegung keine Fremdenergie und keine Steuereingriffe benötigt werden.

Zur Reduktion von Differenzgeschwindigkeiten von relativ zueinander bewegten Körpern (bodies) in Maschinen zum Bearbeiten von etwa Metallbehältern mit Aktivierung direkt am Körper ist in vorteilhaften Ausgestaltungen der Erfindung vorgesehen, dass der zu beeinflussende Körper (body) in zwei unterschiedlich schwere Teile (parts) aufgeteilt ist, wobei der erste, leichtere Teil (part) als primärer Aktivierungserzeuger genutzt wird, der selbst zunächst eine schlagartige Geschwindigkeitsänderung erfährt und der aus seiner dann vorhandenen Relativbewegung zum zweiten Teil (part) des Körpers (body) eine langsame Geschwindigkeitsänderung des zweiten, schwereren Teils (part) bewirkt. Hierbei kann eine vorteilhafte Auslegung vorsehen, dass die Relativgeschwindigkeit zwischen dem primären Aktivierungserzeuger und dem zweiten Teil (part) des Körpers (body) im Moment des Kontaktes nahe null ist. In bevorzugten Ausgestaltungen sind an einem ersten, vorstehenden Teil des Körpers Kurvenelemente vorhanden, die nach dem Auftreffen des ersten vorstehenden Teils auf seiner Endposition durch die dann entstehende Relativbewegung zwischen diesem ersten Teil und dem zweiten noch mit der allgemeinen Maschinenbewegung bewegten Teils des Körpers einen Übertragungshebel durch Kontakt entlang der Kurve auslenken, dessen Bewegung an einer anderen Stelle des gleichen Hebels in anderer Richtung auf den zweiten Teil des Körpers übertragen wird, wobei die eingeleitete Bewegung des Übertragungshebels vorteilhafterweise vorwiegend rechtwinklig zur Bewegung des ersten Teils des Körpers erfolgen kann. Es ist vorgesehen, dass die abgeleitete Bewegung für den zweiten Teil des Körpers vorwiegend achsparallel zu Bewegung des ersten Teils erfolgt.

In einer anderen Ausgestaltung zur Reduktion von Differenzgeschwindigkeiten von relativ zueinander bewegten Körpern (bodies) in Maschinen zum Bearbeiten von Metallbehältern mit Aktivierung ausserhalb der eigentlichen Vorrichtung, erfolgt durch ein mit der Hauptbewegung der Maschine bewegtes Kurvenstück die Manipulation der Vorrichtungsbewegung in der Gestalt, dass der Impuls im Moment des Auftreffens der Vorrichtung auf den externen Anschlag minimiert wird, und/oder wird der Anschlag vor dem Auftreffen des Körpers durch einen mit der Maschinenbewegung gekoppelten Mechanismus so in Bewegungsrichtung des Körpers beschleunigt, dass der Kontakt zwischen Anschlag und Körper ohne Differenzgeschwindigkeit erfolgt und danach der Anschlag mit ansitzendem Körper in die Stillstandsposition abgebremst wird. Es ist insbesondere gewünscht, dass die Auftreffgeschwindigkeit der Vorrichtung im Moment des Auftreffens auf den externen Anschlag nahezu null ist und/oder dass die Auftreffgeschwindigkeit des Anschlags in seine Endposition im Moment des Erreichens der Endposition nahezu null ist

Die Erfindung erlaubt eine Reduktion von Differenzgeschwindigkeiten von relativ zueinander bewegten Körpern in Maschinen zum Bearbeiten von Metallbehältern, wobei sich ein Anschlagelement, über einen Hebel abgestützt, in einer Warteposition befindet, dieser Anschlag, über den Hebel zu einer bestimmten Phase des Maschinenzyklus über ein mit der Maschinenbewegung bewegtes Kurvenstück gesteuert, so beschleunigt wird, dass eine mit der Maschinenbewegung bewegte Vorrichtung mit Differenzgeschwindigkeit nahe null auf den bewegten Anschlag trifft und der Anschlag danach , immer noch über den Hebel und das Kurvenstück gesteuert in seine Endposition abgebremst wird. Die eingeleitete Bewegung des Übertragungshebels erfolgt beispielsweise vorwiegend rechtwinklig zur Bewegung des ersten Teils des Körpers, wobei auch vorgesehen sein kann, dass die abgeleitete Bewegung für den zweiten Teil des Körpers vorwiegend achsparallel zur Bewegung des ersten Teils erfolgt.

### Bezugszeichenliste

- 10: Bearbeitungseinrichtung
- 12: Bewegungseinheit
- 14: Bearbeitungseinheit
- 16: externer Anschlag
- 18: Steuerelement
- 20: Beschleunigungseinheit
- 22: Halteeinrichtung
- 24: Abgriffselement
- 26: Hebel
- 28: Schwenkachse
- 50: Bearbeitungseinrichtung
- 52: zu bearbeitendes Element
- 54: Bewegungseinheit
- 56: Aktivierungseinheit
- 58: Bearbeitungseinheit
- 60: Beschleunigungseinheit
- 62: Abgriffselement
- 64: Steuerelement
- 66: Hebel
- 68: Schwenkachse
- 101: Bewegen der Bewegungseinheit
- 102: Bewegen der Bewegungseinheit
- 103: Bewirken einer Bewegung eines Teils der Beschleunigungseinheit
- 104: Bewirken einer Relativbeschleunigung der Bearbeitungseinheit
- 105: Bewegen der Bewegungseinheit
- 106: Bearbeitung des zu bearbeitenden Elements
- 107: Bewegen der Bewegungseinheit
- 108: Bewegen der Bewegungseinheit
- 109: Bewirken einer Bewegung eines Teils der Beschleunigungseinheit
- 110: Bewirken einer Relativbeschleunigung der Bearbeitungseinheit
- 111: Bewegen der Bewegungseinheit
- 200: Bearbeitungseinrichtung
- 201: Bewegungseinheit
- 202: Bearbeitungseinheit
- 203: Beschleunigungseinheit
- 204: Steuerelement / Anschlag
- 205: Kontakthebel
- 206: Arm
- 300: Bearbeitungseinrichtung
- 302: Bearbeitungseinheit
- 303: Beschleunigungseinheit
- 304: Steuerkurve
- 305: Abgriffselement
- 306: Flanke
- 307: Roller
- 400: Bearbeitungseinrichtung
- 401: Bewegungseinheit
- 402: Bearbeitungseinheit
- 403: Kurvenrolle
- 404: Kurventräger
- 405: Träger
- 406: Anschlag
- 500: Bearbeitungseinrichtung
- 501: Kurvenrolleneinheit
- 502: Anschlag
- 503: Topfkurve

## Patentansprüche

1. Bearbeitungseinrichtung (10, 50, 200, 300, 400, 500) für ein zu bearbeitendes Element (52), insbesondere einen Metallbehälter, mit:
einer Bewegungseinheit (12, 54, 201, 401, 5), die für eine insbesondere zyklische Bewegung ausgestaltet ist,
einer Bearbeitungseinheit (14, 58, 202, 302, 402), die zumindest entlang der Bewegungsrichtung der Bewegungseinheit (12, 54) innerhalb der Bearbeitungseinrichtung (10, 50) beweglich gegenüber der Bewegungseinheit (12, 54) ausgestaltet ist und die für eine Bearbeitung des zu bearbeitenden Elements (52) mit einer im Vergleich zur Bewegungseinheit (12, 54) verringerten, insbesondre auf null verringerten, Relativgeschwindigkeit entlang der Bewegungsrichtung gegenüber dem zu bearbeitenden Element (52) ausgestaltet ist, und
einem Steuerelement (18, 64, 204, 304, 404, 503),
wobei die Bewegungseinheit (12, 54, 201, 401) mit einer Beschleunigungseinheit (20, 60, 203, 303, 403, 502) versehen ist,
**dadurch gekennzeichnet, dass** das Steuerelement (18, 64, 204, 304, 404, 503) und die Beschleunigungseinheit (20, 60, 203, 303, 403, 502) so ausgestaltet sind, dass mit einer Relativbewegung der Bewegungseinheit (12, 54, 201, 401) gegenüber dem Steuerelement (18, 64, 204, 304, 404, 503) mechanisch eine Bewegung zumindest eines Teils der Beschleunigungseinheit (20, 60, 203, 303, 403, 502) mit zumindest einem Anteil quer zur Bewegungsrichtung der Bewegungseinheit (12, 54, 201, 401) verbunden ist, und
dass die Beschleunigungseinheit (20, 60, 203, 303, 403, 502) so ausgestaltet ist, dass mit der Bewegung zumindest des Teils der Beschleunigungseinheit (20, 60, 203, 303, 403, 502) mechanisch eine Bewirkung einer Relativbeschleunigung der Bearbeitungseinheit (14. 58, 202, 302, 402) gegenüber der Bewegungseinheit (12, 54, 201, 401) entlang der Bewegungsrichtung der Bewegungseinheit (12, 54, 201, 401) verbunden ist.

2. Bearbeitungseinrichtung (50) nach Anspruch 1,
wobei das Steuerelement (64) Teil einer Aktivierungseinheit (56) ist, die mit der Bewegungseinheit (54) gekoppelt und zum Kontaktieren des zu bearbeitenden Elements (52) ausgestaltet ist.

3. Bearbeitungseinrichtung (50) nach Anspruch 2,
wobei die Aktivierungseinheit (56) eine geringere Masse als die Bearbeitungseinheit (58) aufweist, insbesondere eine Masse von weniger als 50 % der Masse der Bearbeitungseinheit (58), vorzugweise eine Masse im Bereich von 5 % bis 40 % der Masse der Bearbeitungseinheit (58).

4. Bearbeitungseinrichtung (10) nach Anspruch 1,
mit einer Halteeinrichtung für das zu bearbeitende Element,
wobei das Steuerelement (18) Teil einer Aktivierungseinheit ist, die zumindest entlang der Bewegungsrichtung der Bewegungseinheit (12) ortsfest gegenüber der Halteeinrichtung angeordnet ist.

5. Bearbeitungseinrichtung (10, 50) nach einem der vorstehenden Ansprüche,
wobei die Beschleunigungseinheit (20, 60) ein Abgriffselement (24, 62) aufweist, das mit dem Steuerelement (18, 64) als einem Kurventräger ein Kurvengetriebe bildet,
wobei die Beschleunigungseinheit (20, 60) für die mechanische Bewirkung der Relativbeschleunigung auf die Bearbeitungseinheit durch insbesondere eine Hebelwirkung einer Bewegung des Abgriffselements (24, 62) ausgestaltet ist.

6. Bearbeitungseinrichtung (10, 50) nach Anspruch 5,
wobei das Abgriffselement (24, 62) mit einer Führung am Kurventräger entlang geführt ist und/oder das Abgriffselement (24, 62) mit einer Feder versehen ist, die das Abgriffselement auf den Kurventräger drückt.

7. Bearbeitungseinrichtung (10, 50) nach einem der vorstehenden Ansprüche,
wobei die Beschleunigungseinheit (20, 60) ausschließlich kinetische Energie von der Bewegungseinheit (12, 54) ausschließlich an die Bearbeitungseinheit (14, 58) und ausschließlich kinetische Energie von der Bearbeitungseinheit (14, 58) ausschließlich an die Bewegungseinheit (12, 54) überträgt.

8. Bearbeitungseinrichtung (10, 50) nach einem der vorstehenden Ansprüche,
wobei die Bearbeitungseinheit (14, 58) für eine rotierende Bearbeitung des zu bearbeitenden Elements (52) um eine Achse, insbesondre um eine zur Bewegungsrichtung der Bewegungseinheit (12, 54) parallele Achse, ausgestaltet ist, insbesondere für ein Fräsen, Bördelrollen, Gewinderollen und/oder Sickenrollen.

9. Bearbeitungseinrichtung (10, 50) nach einem der vorstehenden Ansprüche,
wobei die Bewegung der Bewegungseinheit (12, 54) eine zyklische Bewegung mit einer Hin-Bewegung und einer Her-Bewegung ist,
wobei die Hin-Bewegung für eine Bewegung der Bearbeitungseinheit (14, 58) zu dem zu bearbeitenden Element (52) vorgesehen ist und die Relativbeschleunigung der Bearbeitungseinheit (14, 58) gegenüber der Bewegungseinheit (12, 54) ein Abbremsen der Bearbeitungseinheit (14, 58) umfasst,
wobei die Her-Bewegung für eine Bewegung der Bearbeitungseinheit (14, 58) von dem zu bearbeitenden Element (52) weg vorgesehen ist und die Relativbeschleunigung der Bearbeitungseinheit (14, 58) gegenüber der Bewegungseinheit (12, 54) eine Beschleunigung der Bearbeitungseinheit (14, 58) umfasst.

10. Verfahren zur Bearbeitung eines zu bearbeitenden Elements, insbesondere eines Metallbehälters, mit den Schritten:
Bewegen (101, 102, 105, 107, 108, 111), insbesondere zyklisches Bewegen, einer Bewegungseinheit und
Bearbeiten (106) des zu bearbeitenden Elements mit einer im Vergleich zur Bewegungseinheit verringerten, insbesondre auf null verringerten, Relativgeschwindigkeit entlang der Bewegungsrichtung gegenüber dem zu bearbeitenden Element durch eine zumindest entlang der Bewegungsrichtung der Bewegungseinheit innerhalb der Bearbeitungseinrichtung beweglich gegenüber der Bewegungseinheit ausgestaltete Bearbeitungseinheit,
**dadurch gekennzeichnet, dass** das Verfahren ferner umfasst:
mechanisches Bewirken (103, 109) einer Bewegung zumindest eines Teils einer Beschleunigungseinheit der Bewegungseinheit mit zumindest einem Anteil quer zur Bewegungsrichtung der Bewegungseinheit durch eine Relativbewegung der Bewegungseinheit gegenüber einem Steuerelement beim Bewegen der Bewegungseinheit und
mechanisches Bewirken (104, 110) einer Relativbeschleunigung der Bearbeitungseinheit gegenüber der Bewegungseinheit entlang der Bewegungsrichtung der Bewegungseinheit durch die Bewegung zumindest des Teils der Beschleunigungseinheit.

## Claims

1. A machining device (10, 50, 200, 300, 400, 500) for an element (52) to be machined, in particular a metal container, said device comprising:
a moving unit (12, 54, 201, 401, 5) designed to perform a cyclical movement, in particular,
a machining unit (14, 58, 202, 302, 402) which is designed to be moveable relative to the moving unit (12, 54) at least in the direction of movement of the moving unit (12, 54) inside the machining device (10, 50) and which is designed to machine the element (52) to be machined with a relative speed, in the direction of movement relative to the element (52) to be machined, which is reduced in comparison with that of the moving unit (12, 54), in particular to zero, and
a control element (18, 64, 204, 304, 404, 503),
wherein the moving unit (12, 54, 201, 401) is provided with an acceleration unit (20, 60, 203, 303, 403, 502),
**characterized in that** the control element (18, 64, 204, 304, 404, 503) and the acceleration unit (20, 60, 203, 303, 403, 502) are designed in such a way that a movement of at least one part of the acceleration unit (20, 60, 203, 303, 403, 502) with at least one component of movement transverse to the direction of movement of the moving unit (12, 54, 201, 401) is mechanically associated with a movement of the moving unit (12, 54, 201, 401) relative to the control element (18, 64, 204, 304, 404, 503), and
**in that** the acceleration unit (20, 60, 203, 303, 403, 502) is designed in such a way that producing a relative acceleration of the machining unit (14, 58, 202, 302, 402) in relation to the moving unit (12, 54, 201, 401) in the direction of movement of the moving unit (12, 54, 201, 401) is mechanically associated with the movement of at least said part of the acceleration unit (20, 60, 203, 303, 403, 502).

2. The machining device (50) according to claim 1,
wherein the control element (64) is part of an activating unit (56) which is coupled to the moving unit (54) and is adapted to contact the element (52) to be machined.

3. The machining device (50) according to claim 2,
wherein the activating unit (56) has a lower mass than the machining unit (58), in particular a mass less than 50% of the mass of the machining unit (58), preferably a mass ranging from 5% to 40% of the mass of the machining unit (58).

4. The machining device (10) according to claim 1,
comprising a holding device for the element to be machined,
wherein the control element (18) is part of an activating unit which is arranged stationarily in relation to the holding device at least in the direction of movement of the moving unit (12).

5. The machining device (10, 50) according to any one of the preceding claims,
wherein the acceleration unit (20, 60) has a pick-off element (24, 62) which forms a cam mechanism with the control element (18, 64) as cam carrier,
wherein the acceleration unit (20, 60) is designed to impart the relative acceleration mechanically to the machining unit, in particular by a levering effect produced by moving the pick-off element (24, 62).

6. The machining device (10, 50) according to claim 5,
wherein the pick-off element (24, 62) is guided along the cam carrier and/or the pick-off element (24, 62) is provided with a spring which presses the pick-off element onto the cam carrier.

7. The machining device (10, 50) according to one of the preceding claims,
wherein the acceleration unit (20, 60) transfers exclusively kinetic energy from the moving unit (12, 54) exclusively to the machining unit (14, 58) and exclusively kinetic energy from the machining unit (14, 58) exclusively to the moving unit (12, 54).

8. The machining device (10, 50) according to one of the preceding claims,
wherein the machining unit (14, 58) is adapted for machining rotatingly about an axis the element to be machined (52), in particular about an axis parallel to the direction of movement of the moving unit (12, 54), in particular for milling, flange rolling, thread rolling and/or bead rolling.

9. The machining device (10, 50) according to one of the preceding claims,
wherein the movement of the moving unit (12, 54) is a cyclical movement with a movement forth and a movement back,
wherein the movement forth is provided to move the machining unit (14, 58) to the element (52) to be machined, and the relative acceleration of the machining unit (14, 58) in relation to the moving unit (12, 54) involves braking the machining unit (14, 58),
wherein the movement back is provided to move the machining unit (14, 58) away from the element (52) to be machined, and the relative acceleration of the machining unit (14, 58) in relation to the moving unit (12, 54) involves accelerating the machining unit (14, 58).

10. A method of machining an element to be machined, in particular a metal container, said method comprising the steps of:
moving (101, 102, 105, 107, 108, 111), in particular cyclically moving, a moving unit and
machining (106) the element to be machined with a relative speed, in the direction of movement relative to the element to be machined, which is reduced in comparison with that of the moving unit, in particular to zero, by means of a machining unit which is designed to be moveable relative to the moving unit at least in the direction of movement of the moving unit inside the machining device,
**characterized in that** the method further comprises the steps of:
mechanically producing (103, 109) a movement of at least a part of an acceleration unit of the moving unit with at least one component of movement transverse to the direction of movement of the moving unit, by means of a relative movement of the moving unit in relation to a control element when moving the moving unit and
mechanically producing (104, 110) a relative acceleration of the machining unit in relation to the moving unit in the direction of movement of the moving unit, by moving at least said part of the acceleration unit.

## Revendications

1. Dispositif d'usinage (10, 50, 200, 300, 400, 500) pour un élément (52) à usiner, en particulier un récipient métallique, comprenant:
une unité de déplacement (12, 54, 201, 401, 5) qui est conçue pour un mouvement en particulier cyclique,
une unité d'usinage (14, 58, 202, 302, 402) qui est conçue pour être mobile par rapport à l'unité de déplacement (12, 54) au moins le long de la direction de déplacement de l'unité de déplacement (12, 54) à l'intérieur du dispositif d'usinage (10, 50) et qui est conçue pour un usinage de l'élément à usiner (52) à une vitesse relative le long de la direction de déplacement par rapport à l'élément à usiner (52), qui est réduite, en particulier réduite à zéro, par rapport à l'unité de déplacement (12, 54), et
un élément de commande (18, 64, 204, 304, 404, 503),
dans lequel l'unité de déplacement (12, 54, 201, 401) est pourvue d'une unité d'accélération (20, 60, 203, 303, 403, 502),
**caractérisé par le fait que**
l'élément de commande (18, 64, 204, 304, 404, 503) et l'unité d'accélération (20, 60, 203, 303, 403, 502) sont conçus de telle sorte qu'à un mouvement relatif de l'unité de déplacement (12, 54, 201, 401) par rapport à l'élément de commande (18, 64, 204, 304, 404, 503) est relié mécaniquement un mouvement d'au moins une partie de l'unité d'accélération (20, 60, 203, 303, 403, 502) avec au moins une composante transversale à la direction de déplacement de l'unité de déplacement (12, 54, 201, 401), et que
l'unité d'accélération (20, 60, 203, 303, 403, 502) est conçue de telle sorte qu'au mouvement d'au moins la partie de l'unité d'accélération (20, 60, 203, 303, 403, 502) est reliée mécaniquement une provocation d'une accélération relative de l'unité d'usinage (14, 58, 202, 302, 402) par rapport à l'unité de déplacement (12, 54, 201, 401) le long de la direction de déplacement de l'unité de déplacement (12, 54, 201, 401).

2. Dispositif d'usinage (50) selon la revendication 1,
dans lequel l'élément de commande (64) fait partie d'une unité d'activation (56) qui est couplée à l'unité de déplacement (54) et est conçue pour entrer en contact avec l'élément (52) à usiner.

3. Dispositif d'usinage (50) selon la revendication 2,
dans lequel l'unité d'activation (56) présente une masse inférieure à celle de l'unité d'usinage (58), en particulier une masse inférieure à 50 % de la masse de l'unité d'usinage (58), de préférence une masse comprise entre 5 % et 40 % de la masse de l'unité d'usinage (58).

4. Dispositif d'usinage (10) selon la revendication 1,
comprenant un dispositif de maintien pour l'élément à usiner,
dans lequel l'élément de commande (18) fait partie d'une unité d'activation qui est agencée de manière stationnaire par rapport au dispositif de maintien au moins le long de la direction de déplacement de l'unité de déplacement (12).

5. Dispositif d'usinage (10, 50) selon l'une quelconque des revendications précédentes,
dans lequel l'unité d'accélération (20, 60) comprend un élément de prise (24, 62) qui forme une commande à came avec l'élément de commande (18, 64) en tant que porte-came,
dans lequel l'unité d'accélération (20, 60) est conçue pour provoquer mécaniquement l'accélération relative sur l'unité d'usinage par, en particulier, un effet de levier d'un mouvement de l'élément de prise (24, 62).

6. Dispositif d'usinage (10, 50) selon la revendication 5,
dans lequel l'élément de prise (24, 62) est guidé sur ledit porte-came au moyen d'un guide et/ou l'élément de prise (24, 62) est pourvu d'un ressort qui plaque l'élément de prise contre le porte-came.

7. Dispositif d'usinage (10, 50) selon l'une quelconque des revendications précédentes,
dans lequel l'unité d'accélération (20, 60) transmet exclusivement de l'énergie cinétique de l'unité de déplacement (12, 54) exclusivement à l'unité d'usinage (14, 58) et transmet exclusivement de l'énergie cinétique de l'unité d'usinage (14, 58) exclusivement à l'unité de déplacement (12, 54).

8. Dispositif d'usinage (10, 50) selon l'une quelconque des revendications précédentes,
dans lequel l'unité d'usinage (14, 58) est conçue pour un usinage rotatif de l'élément (52) à usiner autour d'un axe, en particulier autour d'un axe parallèle à la direction de déplacement de l'unité de déplacement (12, 54), en particulier pour un fraisage, un sertissage par roulage, un filetage par roulage et/ou un nervurage par roulage.

9. Dispositif d'usinage (10, 50) selon l'une quelconque des revendications précédentes,
dans lequel le mouvement de l'unité de déplacement (12, 54) est un mouvement cyclique comprenant un mouvement de va et un mouvement de vient,
dans lequel le mouvement de va est prévu pour un mouvement de l'unité d'usinage (14, 58) en direction de l'élément (52) à usiner et l'accélération relative de l'unité d'usinage (14, 58) par rapport à l'unité de déplacement (12, 54) comprend un freinage de l'unité d'usinage (14, 58),
dans lequel le mouvement de vient est prévu pour un mouvement de l'unité d'usinage (14, 58) dans la direction opposée à l'élément (52) à usiner et l'accélération relative de l'unité d'usinage (14, 58) par rapport à l'unité de déplacement (12, 54) comprend une accélération de l'unité d'usinage (14, 58).

10. Procédé d'usinage d'un élément (52) à usiner, en particulier un récipient métallique, comprenant les étapes consistant à:
déplacer (101, 102, 105, 107, 108, 111), en particulier déplacer de manière cyclique, une unité de déplacement, et
usiner (106) l'élément à usiner à une vitesse relative réduite, en particulier réduite à zéro, en comparaison de l'unité de déplacement, le long de la direction de déplacement, par rapport à l'élément à usiner, par le biais d'une unité d'usinage qui est conçue pour être mobile par rapport à l'unité de déplacement au moins le long de la direction de déplacement de l'unité de déplacement à l'intérieur du dispositif d'usinage,
**caractérisé par le fait que** le procédé comprend en outre:
provoquer mécaniquement (103, 109) un mouvement d'au moins une partie d'une unité d'accélération de l'unité de déplacement avec au moins une composante transversale à la direction de déplacement de l'unité de déplacement, par un mouvement relatif de l'unité de déplacement par rapport à un élément de commande lorsque l'unité de déplacement est déplacée, et
provoquer mécaniquement (104, 110) une accélération relative de l'unité d'usinage par rapport à l'unité de déplacement le long de la direction de déplacement de l'unité de déplacement, en déplaçant au moins la partie de l'unité d'accélération.
